# EUROPEAN PATENT SPECIFICATION

(11) **EP 2 650 990 B1**
(45) Date of publication and mention of the grant of the patent: **19.11.2014**
(21) Application number: 12164115.3
(22) Date of filing: 13.04.2012
(51) Int. Cl.: H02G 3/04

(54) **Weld-free assembly of galvanized steel parts**
Schweißnahtfreie Anordnung feuerverzinkter Stahlteile
Ensemble sans soudure de pièces d'acier galvanisé

(43) Date of publication of application: 16.10.2013
(73) Proprietor: Vergokan, 9700 Oudenaarde (BE)
(72) Inventor: Leus, Thomas, 9050 Gentbrugge (BE); Aelvoet, Luc, 9700 Oudenaarde (BE); Note, Paul, 8770 Ingelmunster (BE)
(74) Representative: Caers, Raphael Frans Ivo

(56) References cited:
- WO-A1-99/53584
- FR-A1- 2 226 606
- FR-A1- 2 478 891

## Description

### FIELD OF THE INVENTION

The present invention relates to an assembly of galvanized steel parts. More particularly, the invention relates to so-called cable ladders, i.e. open ducts used for supporting electrical cables or other utility provisions against walls or ceilings in environments which may be corrosive towards conventional carbon steel.

### BACKGROUND OF THE INVENTION

Assemblies of galvanized steel parts are popular in the construction industries because they combine the properties of high mechanical strength with usually adequate corrosion resistance.

These assemblies may be used outdoors or indoors. In order to provide the desired mechanical strength, steel is a very common construction material, preferably carbon steel. Stainless steel is less preferred in spite of its higher corrosion resistance, as it is more expensive and the most common types are less performing in terms of mechanical properties. It is therefore often preferred to treat the carbon steel for increasing its corrosion resistance.

Cable ladders typically comprise two parallel, relatively spaced beams or stiles, and rungs arranged between them. Cable ladders are particularly employed as horizontal ladders for power cables, but may also be used vertically, for example in shafts. Cable ladders are commonly used in many wire and cabling applications, for example in power distribution systems, communication centres, data processing and industrial installations to support the extensive cabling systems necessary in these applications. The ladder-type construction offers the advantage that it is open to all sides and allows easy access to cables which frequently have to be checked or rerouted. In addition, cable ladders provide a better ventilation as compared to other cable guiding means, such as cable ducts.

The supported cables are fixed by clamps to the rungs of the ladder. In view of the weight of the cables it is important that the cable ladders are by themselves a rigid construction.

In the field of steel construction, it is conventional practice to shape a steel object, usually from carbon steel, by any conventional shaping process known to the person skilled in the art, followed by galvanizing the steel object. Galvanization is the process of applying a protective zinc coating to steel or iron, in order to prevent rusting. Although galvanization can be done with electrochemical and electro deposition processes, the most common method in current use is hot-dip galvanization, in which steel parts are submerged in a bath of molten zinc at a temperature of around 400°C.

Such a treatment is rather complex and resource-intensive. It is therefore preferred to perform this treatment as closely as possible to the point of production, such as where the steel is produced in the form of steel plate or rolled into a coil, which is upstream in the production chain from where the steel parts are assembled to produce e.g. the desired construction elements.

The steel plate used for forming the profiles is thus typically already galvanized when it is being bent, cut and shaped into a profile. Very popular in the metal construction industry is for instance DX51 (D+Z) hot dip galvanized carbon steel, which is available in sheet and in coils.

The hot dip galvanization of these steels is typically performed in continuous mode, which usually builds only a relatively thin protection layer of about 20 µm. The protection provided by such layer is already considerable, but is often not sufficient for use as such in more aggressive environments, such as those of high moisture, for instance in cooled rooms or spaces, or a marine environment, or those comprising higher concentrations of aggressive compounds such as chlorides, CO₂, NO_{X}, and/or SO_{X}, more particularly when these are present in combination with high moisture.

Products intended for these more severe environments therefore typically require as part of their production process an extra treatment, conventionally a hot dip galvanization treatment but now usually performed in batch mode, such that it leads to a thicker zinc protection layer, such as of 50 µm or more. The extra hot dip galvanization step is for economic reasons preferably located early in the production chain, such as when the sheet or coil is transformed into profiles but before any parts are assembled into more complex structures, because these are usually less volume efficient in transport and/or in the hot dipping step, and they bring a higher risk for pockets of liquid zinc remaining after the hot dipping, or for pockets of pickling liquid or wash water remaining in the product and instantaneously vaporising when they enter into the molten zinc bath. But there may be other reasons why the hot dipping step needs to be located further downstream in the production process.

Welding of galvanized steel damages the zinc coating, with the result that the corrosion resistance is lost at and around the location of the weld. This defect may be "repaired" by applying a zinc paint or spray, for a better result possibly preceded by a primer treatment, but such treatment is usually hardly more than a camouflage and typically fails to restore the original level of corrosion resistance. Its result is also less desired for aesthetic reasons because the patchwork typically remains clearly visible. In order to restore the full corrosion resistance after welding, and to avoid the aesthetic defects, welded galvanized steel assemblies are thus after the assembly step preferably again hot dipped in a bath of molten zinc at about 400°C. This is a very costly extra step in the production process. It may also bring other disadvantages. Small openings in the metal parts may for instance become closed by a thin film of zinc. When the opening is to be used, the zinc film needs to be removed, which requires extra handling and causes debris. In addition, more complex structures may also bring a higher risk for the problem of remaining liquid pockets, as discussed before. These difficulties with galvanized steel which is welded have created a need for weld free assembly methods of construction elements.

FR 2478891 A1 and EP 119670 A1 disclose the assembly of a cable ladder whereby the rungs and beams are provided with appropriate recesses, ridge and a resilient tongue or strip which, at the moment of assembly, snaps into the recess and lock the head of the rung into the side of the beam or stile of the ladder. In order for this connection to be immovable, the shaping of the recesses, ridge and resilient tongue or strip requires a very high dimensional precision. And even if such precision is achieved and available at the moment of assembly, it is quickly lost as soon as the cable ladder is subjected to a load or forces, and the connections quickly become moveable.

WO 99/53584 A1 discloses a similar system wherein the rungs of a cable ladder are provided with teeth which grip behind a C-shaped socket in the side rail or beam of the ladder, the rung being locked with respect to the side rail by a resilient spring tab which is deflected during the assembly but returns to its initial alignment once the teeth of the rung are fully inserted into the socket. Also with this method of connection, high dimensional precision is required, and may soon be lost once the cable ladder is subjected to a load or forces, resulting in the connection becoming moveable.

There has therefore remained a need for methods of connecting galvanized steel parts without welding yet with which the connection remains immovable.

Riveting has been proposed, but requires that first a hole is drilled for the rivet to pass through. The drilling also damages the zinc layer protecting the steel from corrosion, and hence corrosion resistance is impaired. The rivet is usually made from a different kind of metal, such that the combination with the naked carbon steel and/or the galvanized steel surrounding may create a galvanic cell, which is particularly vulnerable to corrosion.

US 2004/0143948 discloses a cold forging process, which is often referred to as "clinching" or "clinch joining". Matching limbs of sheet material of the two parts which are to be connected are brought together. With a hollow or female stamp on one side, the so-called "die", and an appropriately placed and shaped male stamp or pin on the other side, the so-called "punch", and an appropriately strong and sudden force pressing the punch into the die, the two sheets are locally stretched into the cavity of the die, and the two sheets are bonded together. DE 102008020242 discloses a variant involving the rotation of the stamp or punch and/or the die in order to produce friction heat for improving the forging. In a particular variant, the punch may have a star-shaped profile.

Applying these cold forging connection methods on galvanized steel brings the problem that the metal deformation may locally be so extreme that the zinc layer becomes damaged, and that the corrosion protection is lost. The additional step for repairing the corrosion resistance of the galvanized steel may therefore still not be omitted.

There therefore remains a need for a method for connecting galvanized steel parts which creates an immovable connection yet which preserves the corrosion resistance of the treated steel.

It has been proposed to provide the first metal part with slits, and the second metal part with protruding lips which are passed through the slits and are subsequently bent around the first part, pressing the first part against the second part. The proposals made so far however still apply high forces very locally to the steel, and still create excessive local deformation of the galvanized steel by cold forging, such that the zinc protective layer becomes locally damaged and the corrosion resistance is not maintained.

The present invention seeks to improve the method for connecting two galvanized steel parts to each other.

The present invention aims to obviate or at least mitigate the above described problem and/or to provide improvements generally.

### SUMMARY OF THE INVENTION

According to the invention, there is provided an assembly wherein at least two galvanized steel parts are connected to each other, and a method for connecting two galvanized steel parts as defined in any of the accompanying claims.

The present invention provides an assembly wherein at least two galvanized steel parts are connected to each other, whereby the first part comprises a receiving limb having at least one opening and the second part comprises at least one head end which engages with the receiving limb and is provided with at least one lip protruding in a first plane from the head end, the at least one lip passing through the opening in the receiving limb, bending behind the receiving limb, whereby the bent end of the lip is substantially following a second plane which intersects and forms an angle with the first plane, the lip engaging with the receiving limb and pressing the receiving limb against the head end, thereby connecting the two galvanized steel parts, **characterized in that** the intersection of the at least one lip with a third plane, which is the plane bisecting the angle formed between the first plane and the second plane and which bisecting plane cuts the lip, shows a curve relative to the intersection of the first and the second plane.

The assembly according to the present invention is preferably a cable ladder.

In another embodiment, the present invention provides a method for connecting two galvanized steel parts with each other to form the assembly according to the present invention, the method comprising the steps of (i) passing the at least one protruding lip of the second part through the at least one opening of the receiving limb of the first part, (ii) subsequently bending the at least one lip behind the receiving limb and (iii) pressing the bent end of the at least one lip against the receiving limb.

We have found that the ends of the lips which pass through the openings of the receiving limb may be bent behind the receiving limb, and that this bending may be performed without causing excessive local stretching of the zinc layer which protects the underlying carbon steel from corrosion. We have thus found that the lips may be bent, the bent part of the lip may be made to engage with the receiving limb and to press the receiving limb against the head end of the second part, preferably a recessed section thereof, without damaging the zinc layers of the lip and of the receiving limb, or carving excessively into the steel surface, such that the original corrosion protection of the galvanized steel of both parts is maintained, because the original shape of the receiving limb and/or the bent lip remains substantially undisturbed. The inventors have found that this represents a significant improvement as compared to clinched or welded connections, or with connections whereby the lips and/or the receiving limbs are cold forged and locally deformed excessively, because of the strong forces which are being applied, and which lead to significant carving into the steel surfaces of the galvanized steel and therefore damaging the protective zinc layer. A very significant advantage of the present invention is thus that any subsequent treatment for restoring the corrosion resistance of the assembly may be dispensed with. There is thus no need for any further treatment with a zinc paint or spray, and also not for any hot dip galvanizing treatment, of the assembly according to the present invention. The invention represents also an improvement compared to assemblies which are riveted together, primarily because of the less complex assembly step but also because the lower risk for local hot spots prone for increased corrosion.

The inventors have further found that the curved shape given to the bent end of the lip provides a high rigidity to the bent lip. This brings the advantage, when the connection of the two steel parts is subjected to a load or forces, that the connection remains immoveable under higher stresses as compared to a lip of which the bent end is substantially flat. While a flat end of the lip may more readily be bent back up and release its pressure on the receiving limb, a curved form of the bent lip requires stronger forces before its bent end may bend back up and release its pressure on the connection, which then risks to become moveable and the construction comprising the assembly may loose its rigidity. The inventors have found that the connection according to the present invention maintains its immovability under more severe conditions as compared to the connections which are described hereinabove as part of the state of the art wherein a resilient tongue, strip or tab locks the second part in its connection with the first part.

### BRIEF DESCRIPTION OF THE DRAWINGS.

Figure 1 shows a perspective view of an end piece of a cable ladder assembly according to the present invention.
Figure 2 shows a perspective view of a head end with two protruding lips, of a rung as the second part for an assembly according to the present invention.
Figure 3 shows a plan view of a detail of the receiving limb with two openings, of a first part for an assembly according to the present invention.
Figure 4 shows a perspective view of an assembly according to the present invention.
Figure 5 shows a partial cross section of a first part and side view of a second part, brought in position for connecting the two parts and forming an assembly according to the present invention.
Figure 6 shows a perspective view of a beam of a cable ladder as the first part and a rung as the second part, brought in position for connecting the two parts and forming an assembly according to the present invention, i.e. before the lips have been bent.
Figure 7 shows the same perspective view of Figure 6 after the lips have been bent and the assembly according to the present invention has been formed.
Figure 8a shows a perspective view, and Figure 8b a vertical cross section according to line Vlllb in Figure 8a, of one bent lip according to the present invention.

### DETAILED DESCRIPTION

The present invention will be described in the following with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention may operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In the context of the present invention, the terms "bent tip" of the lip is used interchangeably with the term "bent end" of the lip.

The corrosion resistance within the context of the present invention is preferably tested with the so-called "salt mist test", preferably according to ASTM B117, or with the salt spray test according to National Skills Standards and Testing (NSST), or according to DIN 50021. Additional possibly relevant tests may be performed, such as the climate variation test according to VDA-621-415 and/or the Kesternich test according to DIN 50018 and/or DIN 50919.

The steel parts which form the assembly according to the present invention are galvanized, i.e. covered with a zinc layer. This galvanization is typically performed by dipping (hot dip galvanization) of an iron or steel article in a molten bath of zinc or zinc alloy, in continuous or batch operation. Pretreatment of the article before the hot dipping is important in order to avoid defects in the zinc layer. Pretreatment steps may include degreasing, rinsing, pickling, rinsing, shot blasting, treatment in a fluxing bath, and/or drying, and the steps may be repeated individually or by cycle if needed. The molten zinc may contain aluminium, such as from 5 to 500 ppm by weight, and also other alloying components, such as Ni, Sn, Pb, Bi, Mn, V, ..., in order to improve the deposition of the zinc layer and the final properties of the layer. After the hot dipping step, the article is usually cooled in the air or in a water bath.

The bent lip is preferably curved transversal to the longitudinal direction of the bent end of the lip, and more preferably this transversal curvature of the lip is present close to the bending line of the lip, which may be defined as the line which connects the points of highest curvature of the bent lip.

In an embodiment of the assembly according to the present invention, the intersection of the at least one lip with the third plane shows a curve over at least 20% of the length of the intersection of the at least one lip with the third plane, preferably over at least 30%, more preferably over at least 40%, even more preferably over at least 50%, yet more preferably over at least 60%, preferably over at least 70%, more preferably over at least 75%, even more preferably over at least 80%, yet more preferably over at least 85%, preferably over at least 90% and more preferably over at least 95% of the length of the intersection. The inventors have found that the more of the length of the intersection is showing curvature, the more the bent lip is resistant against being bent back up under stress.

In an embodiment of the assembly according to the present invention, a second intersection of the at least one lip with an imaginary surface running perpendicular to the surface of the receiving limb facing the bent end of the lip and running along the outer edge of the opening in the receiving limb which is covered by the bent end of the lip, shows a curve relative to the outer edge of the opening in the receiving limb. This curvature brings the advantage that the bent lip is curved, and hence stronger for resisting a force attempting to bend the lip back up from its desired position, at the location where the lip passes and contacts the outer edge of the opening in the receiving limb. This is the location where any clearance would bring the highest risk for jeopardizing the immovability of the connection between the steel parts, and hence deteriorating the rigidity of the assembly. The curving of the lip at this location provides extra strength at the point where it brings the highest strength benefit.

Preferred in the embodiment according to the present invention with the curved second intersection, the second intersection shows a curve over at least 20% of the length of the second intersection, preferably over at least 30%, more preferably over at least 40%, even more preferably over at least 50%, yet more preferably over at least 60%, preferably over at least 70%, more preferably over at least 75%, even more preferably over at least 80%, yet more preferably over at least 85%, preferably over at least 90% and more preferably over at least 95% of the length of the intersection. The inventors have found that the more of the length of the second intersection is showing curvature, the more the bent lip is resistant against being bent back up under stress.

In an embodiment of the assembly according to the present invention, the surface of the receiving limb which engages with the bent end of the at least one lip, shows a curve relative to the second plane. By also providing curvature on the surface of the receiving limb, the contact area between the bent end or part of the lip and the receiving limb may be increased, which improves the immovability of the connection between the two steel parts.

In an embodiment of the assembly according to the present invention, at least the part of the outer edge of the opening in the receiving limb which is covered by the bent end of the at least one lip, also shows a curve relative to the second plane. This feature brings the advantage that the contact area between the bent lip and the receiving limb is further increased, which is to the further benefit of the immovability of the connection between the two steel parts.

In an embodiment of the assembly according to the present invention, the surface of the receiving limb which engages with the bent end of the at least one lip runs substantially parallel to the bent end of the lip. This further increases the contact area between the bent lip and the receiving limb, further contributing to the immovability of the connection between the two steel parts and to the rigidity of the assembly.

In an embodiment of the assembly according to the present invention, the bent end of the lip shows, transversely to the direction into which the end of the lip points, a concave curvature relative to the contact surface between the head end and the receiving limb. Expressed alternatively, the curves of the lip defined in accordance to the present invention, are concave relative to the contact surface between the head end and the receiving limb, in particular relative to a plane approximating this contact surface. The inventors have found that a concave curvature, as compared to a convex curvature, brings the advantage that the bent ends of the lips may be sunk into a cavity provided in the receiving limb. This moves the potentially sharp edges of the bent lip into a position where they represent less risk for injury to personnel handling the assembly, or for unintentional restraining or damaging cables or wires coming in contact with the assembly.

In an embodiment of the assembly according to the present invention, the curved nature of the bent end of the lip extends over a substantial part of the length of the bent end of the lip, preferably at least 10%, more preferably at least 15%, even more preferably at least 20%, yet more preferably at least 25%, preferably at least 30% of the length of the bent end of the lip. The inventors prefer to provide the extra rigidity brought by the curvature to a significant portion of the bent end of the lip, preferably the portion closest to the bending line of the bent lip, where it is most important to resist against bending the lip back up.

In an embodiment of the assembly according to the present invention, the at least one lip is provided with a perforation which, in the direction into which the lip protrudes from the head end of the second part, runs at least up to the bending line of the lip, which may be defined as the line which connects the points of highest curvature of the bent lip, preferably ending substantially at the bending line of the lip. This perforation at this location in the lip brings an advantage in the assembly method, in that the bending of the lip preferably occurs substantially at a particular and predetermined location, i.e. at the point where the perforation ends relative to the head end. The perforation represents a local weakening against bending, such that the lip bends at the end of the perforation. The perforation has the additional advantage that the lip typically bends deeper at the weaker point of the perforation, such that the perforation enhances the concave curvature of the bent lip, which is a preferred feature of the present invention. Yet the perforation itself is located in the part of the lip which is not subject to the lip bending forces during the assembly process. Because of the cooperation between at least two lips, that part of the lip is also not subject to any bending forces later, as part of the assembly, during installation or when the assembly is subjected to loads.

In an embodiment of the assembly according to the present invention, the zinc layer on the at least one lip, preferably the zinc layer on the second part, has a thickness of at most 70 µm, preferably at most 60 µm, more preferably at most 50 µm, even more preferably at most 40 µm, yet more preferably at most 30 µm, preferably at most 25 µm, more preferably at most 20 µm, even more preferably at most 17 µm, preferably at most 15 µm, more preferably at most 12 µm, even more preferably at most 10 µm, preferably the zinc layer being obtained by hot dip galvanization, preferably by the hot dip galvanization process, including the pretreatment steps, in particular the flux treatment in a so-called flux bath, and preferably using a zinc bath containing 200-70000 ppm wt Al, more preferably 400-600 ppm wt Al, as described in WO 0242512 or in WO 2010/081905 A1, or alternatively by electroplating, also known as electro galvanization. The inventors have found that with a thinner galvanization layer, substantially meaning the zinc layer, the risk for damaging the layer by the bending of the lip is further reduced, such that the need for an aftertreatment of the assembly, in order to restore the corrosion protection, is further reduced. An additional advantage of a thin zinc layer is that less raw materials are consumed, and also that the risk is lower that openings become closed by a zinc film, such that there is less need for an additional step for removing such film from openings in the assembly.

In an embodiment of the assembly according to the present invention, the zinc layer on the first part has a thickness of at least 10 µm, preferably at least 20 µm, more preferably at least 30 µm, even more preferably at least 40 µm, yet more preferably at least 50 µm, preferably at least 60 µm, more preferably at least 70 µm, even more preferably at least 80 µm, preferably at least 90 µm, more preferably at least 100 µm, even more preferably at least 150 µm, yet more preferably at least 200 µm, preferably the zinc layer being obtained by hot dipping in a liquid zinc bath or a bath of a zinc alloy. For layer thicknesses of 100 µm or above, the inventors prefer to use two hot dipping steps. The inventors have found that the first galvanized part, i.e. the part with the openings not having the lips, may readily be galvanized with conventional galvanizing techniques, such as regular hot dipping galvanization, which treatments typically produce galvanization layers which have a higher thickness. The advantage of the conventional galvanization techniques are that they are practiced by a larger number of players, and therefore are more economical to the consumer.

In an embodiment of the assembly according to the present invention, the lip has a flat shape up to where it is bent around the receiving limb. This embodiment is the simplest and easiest to provide, as the lips may be cut from sheet metal extending from the head end, preferably as an extension of a part of the profile of the second steel part of the assembly.

In an embodiment of the assembly according to the present invention, the second part of the assembly is provided with at least two lips having the characteristics of the at least one lip, the at least two lips preferably protruding from the second part in substantially the same direction, preferably the at least two lips passing through at least two openings in the receiving limb. The inventors have found that the provision of two lips for connecting the same two steel parts provides extra rigidity to the connection, by advantages such as a lever effect of the second lip on the connection of the first lip.

In the embodiment of the assembly according to the present invention having a second part with at least two lips, the at least two lips from the same second part are bent behind the receiving limb, and the outer edges of the opening or openings in the receiving limb which are covered by the bent end of the lips run substantially parallel to each other. This particular setup brings the advantage that the two lips and the outer edges of the two openings provide a better cooperation in providing an immovable connection of the two steel parts. The setup increases the lever effect of one bent lip with respect to the other bent lip, and hence contributes further to the immovability of the connection and to the rigidity of the assembly.

In an embodiment of the assembly according to the present invention, two lips of the same second part are bent outwardly relative to each other behind the receiving limb, preferably substantially pointing away from each other, more preferably pointing in opposite directions. This arrangement is preferred over bending the lips towards each other, because it also increases the lever effect of one bent lip with respect to the other bent lip, and hence contributes further to the immovability of the connection and to the rigidity of the assembly.

In an embodiment of the assembly according to the present invention, the openings in the receiving limb are narrow slits having a length which is larger, yet not substantially larger, than the width of the lips at the location where the lips pass through the slits of the receiving limb. Narrow slits are relatively easy to make, and hence present a relatively simple embodiment. By adapting the length of the slit to the width of the lip which it is receiving, lateral movements of the lip in the slit is impaired, which contributes further to the immovability of the connection and to the rigidity of the assembly.

In an embodiment of the assembly according to the present invention, the width of the lip is narrowing as the lip protrudes further from the head end of the second part, preferably the lip ending in a substantially triangular extension pointing its tip away from the head end of the second part, preferably the tip of the triangle being rounded. This shape of lip facilitates a correct positioning of the lip during the assembly method, when the lip passes through the opening when the head end and the receiving limb are moved towards each other. This shape of lip also facilitates that the lip may be sunk into a cavity provided in the receiving limb, hence contributes to the advantages of less risk for injury, or unintentional restraint or damage of cabling and wiring.

In an embodiment of the assembly according to the present invention, the receiving limb is provided with a recess sufficiently large to receive and host the bent part of the lip entirely. In this way, the risk for a presence of sharp extensions from the assembly are minimized.

In an embodiment of the assembly according to the present invention, the outer surface of the bent end of the lip runs substantially smoothly with the outer surface of the receiving limb, such that a bare hand gliding over the bent end of the lip and the surrounding surface of the receiving limb is not injured, preferably not significantly obstructed in its movement. This brings the advantage that the risk for injury is reduced for the personnel handling the assembly, as well as the risk that any sharp edges or extensions from the assembly may damage surfaces with which the assembly comes in contact.

In an embodiment of the assembly according to the present invention, the two galvanized steel parts are connected to each other in an angle, preferably the angle between the first and the second galvanized steel parts being substantially a right angle. The inventors have found that the connection of steel parts according to the present invention is particularly suitable for assembling elements of steel construction, a field in which profiled galvanized steel parts are typically connected to each other in an angle, very commonly substantially a right angle.

In an embodiment of the assembly according to the present invention, the receiving limb is provided with a cross-section comprising a U-shaped profile for receiving the head end of the first part and enclosing the head end with the flanges of the U-shaped profile, preferably any free end of the flanges being bent inwards into the U-shaped profile in an angle of more than 90° relative to the flange, whereby preferably the inwardly bent strip is provided with a recess for allowing the head end to pass and optionally to engage with the flange of the U-shaped profile having the free end, more preferably the recess in the inwardly bent strip being tapered in the direction of reception of head end of the second part. The inventors have found that such profile provided to the receiving limb enjoys a particularly strong structure, yet is relatively easy to produce from sheet or coiled galvanized metal, and this preferably without damaging the protective layer of zinc. Bending the free end of the flanges of the U-shape inwards brings the advantage of adding structural strength and moving potentially sharp edges inward, which increases the safety and reduces the risk of unintentional damage to surfaces with which the assembly may come in contact. The recess improves the contact area between the two parts, further reducing the rigidity of the connection. The tapering of the recess facilitates in positioning the parts relative to each other during the assembly process.

In an embodiment, the present invention provides a cable ladder comprising the assembly according to the present invention wherein at least one of the beams forms the first part and at least one of the rungs forms the second part. Preferably all rungs are connected to the two beams of the cable ladder using the connection forming the assembly according to the present invention.

In an embodiment of the cable ladder according to the present invention, the rungs are provided with a cross section having a U-shaped sheet profile, the flanges of which are preferably bent over inwardly at at least one free edge, preferably at both edges. One advantage is again that any sharp edges are bent inwards. Such a rung construction also allows the ready arranging of clamps in the gutter-like recess of the rung for fastening in or to the cable ladder a power cable or the like.

In an embodiment of the cable ladder according to the present invention, the lips protruding from the head end of the rung are provided symmetrically such that the rung may be connected to the beam or stile with the opening of the U-shaped sheet profile directed towards more than one possible direction relative to the beam or stile, preferably the openings of adjacent rungs being directed in different positions, more preferably towards opposite directions, even more preferably towards opposite sides of the cable ladder. In this embodiment the gutter-like recesses of consecutive rungs in the cable ladder may for instance point towards opposite sides of the ladder, such that a cable may readily be fastened both to the underside and to the top side of the rungs of the cable ladder.

In an embodiment of the cable ladder according to the present invention, at least one and preferably both of the beams have a cross section having the profile of a substantially rectangular S-shape, whereby preferably the S-profiles of the two beams are arranged in symmetry with each other, whereby preferably a first U-shaped half of the S-profile is receiving the head end of the rungs, the bottom of that U-shaped half of the profile preferably being provided with an inwardly protruding ridge wherein the bent ends of the lips are received. The S-shaped profile enjoys a particularly strong structure, yet is relatively easy to produce from sheet or coiled galvanized metal, without damaging the protective layer of zinc. The ridge brings further rigidity, and at the same time provides a recess in which the bent end of the lips may be sunk and hosted, bringing and/or enhancing the advantages already mentioned above.

In the embodiment of the cable ladder according to the present invention comprising a beam with the S-shaped profile, the free flange of the second U-shaped half of the S-profile is bent inwards into the U-shaped profile, preferably in about a right angle relative to the free flange. The advantage is again that any sharp edges are bent inwards, reducing the risk for injury and/or damage.

In the embodiment of the cable ladder according to the present invention, the head end of at least one beam (5) of the first cable ladder is provided with a means (25) for partially overlapping with the tail end of a beam of a second cable ladder having substantially the same cross sectional profile as the beam of the first cable ladder, preferably the means for overlapping being a male element, which is flat or having a cross section at least partly similar to the cross sectional profile of the beam of the cable ladder but with smaller dimensions, suitable for overlapping at least partially with the tail end of the beam of the second cable ladder acting as female element, the two beams preferably overlapping over a length of at least 50 mm, more preferably at least 70 mm, even more preferably at least 90 mm, and most preferably about 100 mm. The inventors have found that this feature allows connecting two, or even more, similar cable ladders to be connected lengthwise to each other. The cable ladder according to the present invention may thus serve as a module element for a modular entity comprising several similar cable ladders and extending over a longer length than only one cable ladder. This facilitates the ultimate provision of long cable ladders, or a cable ladder with long length, by connecting smaller modules of cable ladders which are easier to produce, store and transport.

In an embodiment of the method according to the present invention, the original shape of the receiving limb remains substantially undisturbed by the steps of (ii) the bending of the at least one lip and (ii) the pressing of the bent end of the at least one lip against the receiving limb. Contrary to the clinching or cold forging, this method avoids local damage to the protective zinc layer, which would destroy the corrosion resistance and necessitate a post-treatment for restoring the original corrosion resistance.

In an embodiment of the method according to the present invention, the steel parts are placed in jigs which are in step (i) moved such that the head end of the second part moves towards and engages with the receiving limb of the first part. Such assembly method is facilitated by the shape of the lips before they are bent and by the tapering of recesses where the two parts approach each other for being connected. This assembly method may readily be automated such that only a minimum human intervention is required.

In an embodiment of the method according to the present invention, in steps (ii) and/or (iii) at least one stamp is brought against the side of the at least one lip protruding through the openings of the at least one opening of the receiving limb, the stamp being moved laterally for bending the lips behind the receiving limb and optionally also being moved forward for bending the at least one lip behind the receiving limb and/or being moved for pressing the bent end of the lip against the receiving limb, and where appropriate into a recess provided therein. The inventors have found that these features readily provide an unmovable assembly of the two parts, and at the same time also maintain the integrity of the protective zinc layer on the galvanized steel.

In an embodiment, the surface of the stamp or stamps used in the process according to the present invention and intended for contacting the lip during the bending is rounded relative to the direction of lateral movement of the stamp and/or relative to the first plane, i.e. the plane in which the unbent lip protrudes from the head end of the second part. The applicants have found that such rounding is successful in substantially avoiding fracture of the lip and/or the stamp, and also that it reduces the shear forces on the surface of the lip during the bending and pressing, such that the risk for damaging the protective zinc layer is further reduced.

In another embodiment, the curving of such rounding maintains a radius which falls within a range relative to the length of the lip which needs to be bent. If the length of the part of the lip which needs to bent is labelled as L, the radius R of the curving of the surface of the stamp which comes in contact with the lip during the bending step is preferably at least 0.2 L, more preferably at least 0.5 L, even more preferably at least 0.75 L, and yet more preferably at least 0.80 L. The applicants have found that such smoother rounding of the surface of the stamp reduces the risk that the lip unintentionally bends at a location further away from the head end, i.e. away from the point where it passes the opening in the receiving limb where the lip is supposed to start bending, and where optionally the end of the perforation in the lip may be located. The applicants further prefer that radius R is not excessively large, in order to keep the size of the stamp(s), and/or the length of the path necessary for completing the bending, limited. For this reason the applicants prefer that the radius R is not longer than 2 L, preferably at most 1.5 L, more preferably at most 1.25 L, and even more preferably at most 1.20 L.

In another embodiment of the process according to the present invention, the forward movement in step (iii) is performed as a separate step subsequent to the lateral movement in step (ii). The applicants have found that this separation of the two movements reduces the forces on the lip and reduces the risk for damaging the protective layer on the lip and/or on the receiving limb. The applicants have further found that this separation of steps makes it easier to also add in step (iii) the optional pressing of the bent end of the lip in the recess which may be provided in the receiving limb to receive and host the bent end of the lip, preferably entirely.

In another embodiment, the process according to the present invention for producing a cable ladder comprises
a) the positioning of the beams along both longitudinal sides of a moveable frame, optionally held in place by magnets, and preferably secured into place, once properly positioned such as against a bump, by electromagnets,
b) the positioning of the rungs in between the beams, the distance between them being preferably secured by a plurality of pins or bumps corresponding to the location of the openings in the beams,
c) the movement of at least one of the beams, for approaching each other and having the lips of the rungs pass through the openings in the beams,
d) the lateral movement of at least one stamp, i.e. along the length direction of the beam, in order to bend at least one lip,
e) optionally followed by the pressing of the stamp against the bent part of the lip such that this bent part is pressed against the beam and optionally pressed into a recess provided therein, and
f) opening the frame and removing the assembled cable ladder from the frame, optionally by lifting the rungs above the pins or bumps, or by retracting the pins or bumps, to liberate the rungs.

In an embodiment of the process according to the present invention, the bending of two adjacent lips may be performed using only one stamp, the stamp preferably first moving in one lateral direction to bend the first lip, optionally followed by a movement resulting in pressing the bent part of the lip against the receiving limb, and subsequently moving in the opposite lateral direction to bend the second lip, again optionally followed by a movement resulting in pressing the bent part of the second lip against the receiving limb. The applicants have found that the embodiment with one stamp for bending two lips is more appropriate for smaller assemblies, such as for cable ladders having a distance between two adjacent rungs of 200 mm or less, because of equipment simplicity.

In another embodiment of the process according to the present invention, the bending of two adjacent lips may be performed using two stamps, which preferably move in opposite directions, more preferably bending the lips in opposite directions away from each other. Also here the bending action may be followed by a pressing action as explained before.

In an embodiment of the method according to the present invention, the at least one lip, and preferably the second part of the assembly, is treated prior to step (i) such that it is covered with a relatively thin zinc layer having a thickness of at most 70 µm, preferably at most 60 µm, more preferably at most 50 µm, even more preferably at most 40 µm, yet more preferably at most 30 µm, preferably at most 25 µm, more preferably at most 20 µm, even more preferably at most 17 µm, preferably at most 15 µm, more preferably at most 12 µm, even more preferably at most 10 µm. The applicants have found that such zinc layer of high quality may be obtained by hot dip galvanization, preferably by the hot dip galvanization process, including the pretreatment steps, in particular the flux treatment in the so-called flux bath, and preferably using a zinc bath containing 200-70000 ppm wt aluminium (Al), preferably 400-600 ppm wt Al, which are described in WO 0242512 or in WO 2010/081905 A1, or alternatively by electroplating, also known as electro galvanization. This particular treatment of the lip, which is intended to be bent, or the part comprising the lip intended to be bent, brings the advantage of a thinner yet high quality galvanization layer providing a protection which is similar to the thicker layers obtained by batch mode hot dip galvanization, and which brings the advantages already mentioned in that context hereinbefore.

In an embodiment of the method according to the present invention, at least the first part of the assembly is hot-dip galvanized prior to step (i), and preferably in batch mode. This feature of the method brings the advantage of overall economy of the method, because conventional hot dip galvanization is a treatment step which is commonly available from a wide range of suppliers. The batch mode hot dip galvanization brings the advantage that it usually provides a thicker zinc layer. The applicants have however found that excessively thick zinc layers, such as above 100 µm, are preferably avoided because they may become too brittle and represent an excessive risk for damage or break under load.

In another embodiment, the process according to the present invention further comprises the hot dip galvanization of the assembly. Such additional treatment may repair possible yet unexpected damages to the protective layer, however may be required to assure more demanding and/or conservative customers. Such treatment may be more appropriate in case the protective layer on the lips to be bent is rather thick and thus relatively vulnerable. Such treatment may be simply required because of a prescription by the client, irrespective of the technical performance. Such treatment may be appropriate if the product is intended for high severity applications, where for instance the product may be subjected to severe and mechanically demanding environments, such as sandblasting or occasional sandstorms.

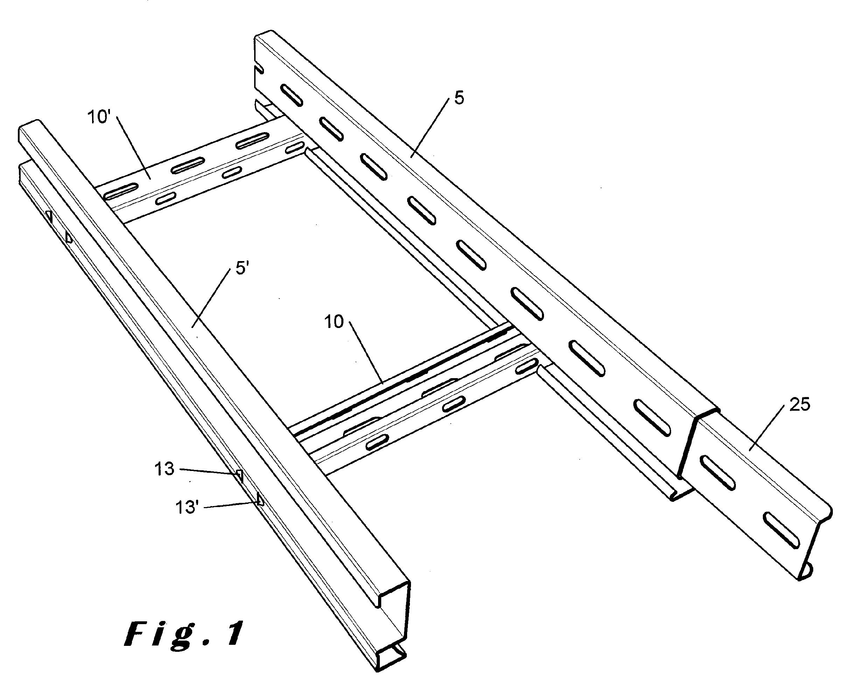

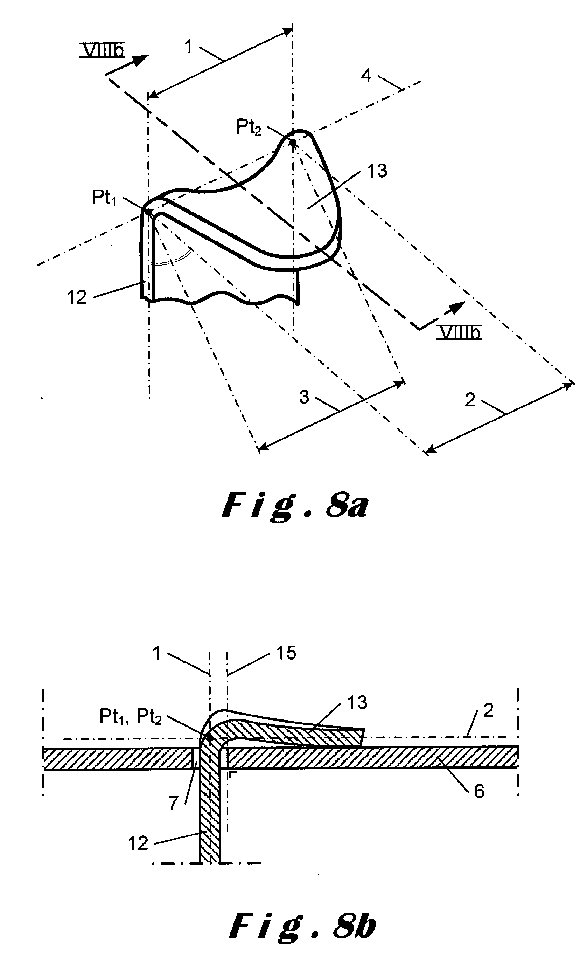

The present invention is now illustrated by a detailed description of a preferred embodiment. This embodiment is shown in Figures 1-7, in which the same number each time indicates the same element. Figure 8 shows a detail of the bent lip according to the present invention.

Figure 1 shows a perspective view of an end piece of a cable ladder assembly according to the present invention. The end piece of Figure 1 comprises two rungs 10, 10' connected to two beams 5, 5', each connection made by a pair of bent lips 13, 13' (only one pair labeled). One head end of one beam is provided with a male extension 25 having a cross section partly similar to the cross sectional profile of the beam but with smaller dimensions, suitable for overlapping at least partially with the tail end of the beam of a second cable ladder (not shown). The male element in Figure 1 is provided with means for connecting the male element to the female element, in this case the male element is provided with openings for passing connection means, such as suitable clips, bolts, screws or the like. The rungs 10, 10' in Figure 1 have a U-shaped sheet profile, the flanges thereof being bent over inwardly at both free edges. Such rung profile is particularly suitable for receiving one or more clamps for attaching a cable or the like to the rung of the ladder. The adjacent rungs 10, 10' in Figure 1 are connected to the beams with the openings of their U-shaped profile directed in opposite directions. With the openings or the rung profiles alternatively pointing to opposite sides of the cable ladder, cables or the like may readily be attached to both sides of the cable ladder. The beams 5, 5' have a cross section which has the profile of a substantially rectangular S-shape, and the S-profiles of the two beams are arranged in symmetry with each other. The first U-shaped half of the S-profiles is suitable for receiving the head ends of the rungs 10, 10'.

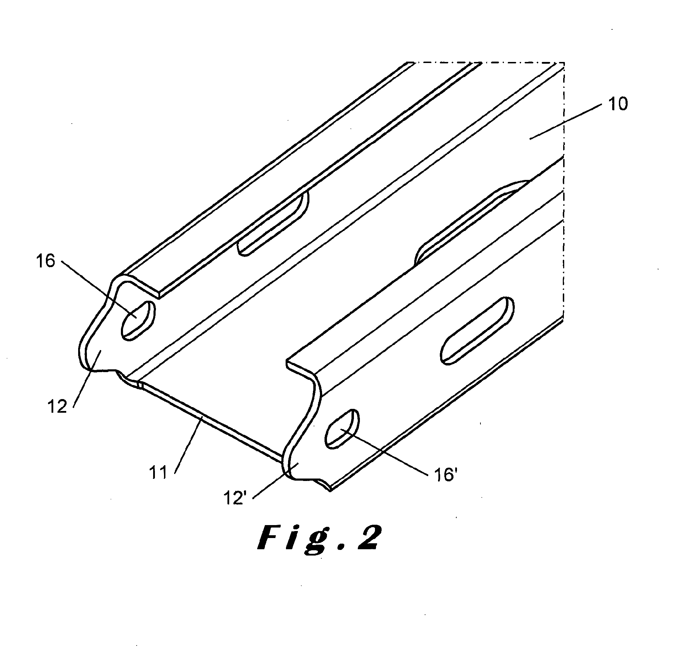

Figure 2 shows a perspective view of a head end of a cable ladder rung of a cable ladder according to the present invention. The rung 10 has a head end 11 and two protruding lips 12, 12', protruding from the head end 11 in substantially the same direction. The lips 12, 12' have a width which is narrowing as the lips protrude further from the head end 11 of the rung 10, the lips 12, 12' end actually in a substantially triangular extension pointing its tip away from the head end 11, and the tip of the triangle is rounded. The lips are further provided with perforations 16, 16' which runs, in the direction into which the lip protrudes from the head end of the run, up to the intended bending line of the lip. The end of the perforation brings a local weakening of the lip at the point where the lip is intended to be bent, thereby defining the location where the lip is most likely to bend under a force coming from the side of the flat lip.

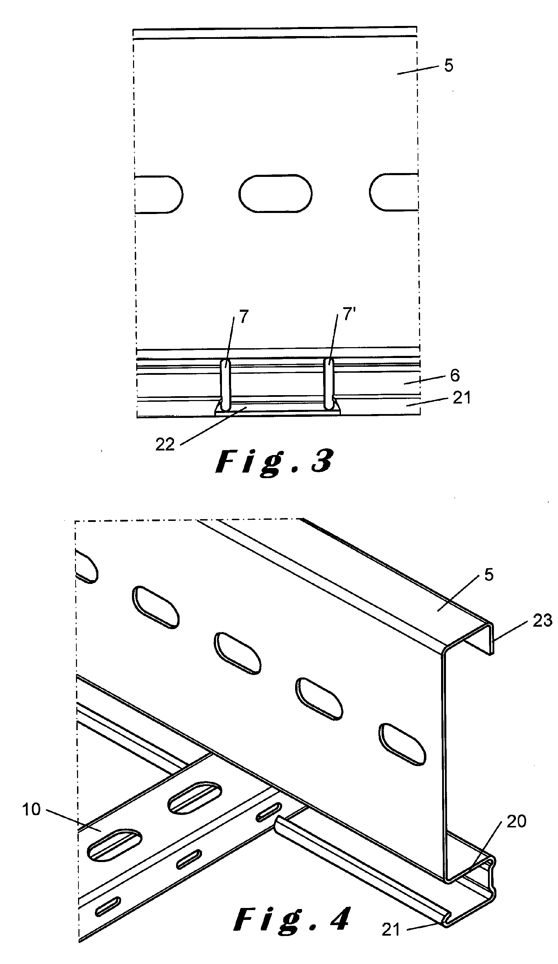

Figure 3 shows a plan view of a detail of the receiving limb 6 of a cable ladder beam 5 as a first part for an assembly according to the present invention. Figure 3 shows two openings 7, 7', which are narrow slits, suitable for letting the lips of the second part pass through. The outer edges of the two openings 7, 7' all run substantially parallel to each other. Particularly when the lips are bent in opposite directions, preferably outwardly and away from each other, does this arrangement, of the edges of the slits to be covered by the bent lips, provide extra strength and lack of movement to the connection. More visible in Figure 4, but also indicated in Figure 3, is shown that the receiving limb 6 has a U-shaped cross-section of which the lower free end 21 of the flange of the U-shape is bent inwards to the U-shaped profile. The inwardly bent strip 21 thus formed is provided with a recess 22 for allowing the head end of the rung pass. The recess 22 is tapered in the direction of reception of the head end of the rung. This arrangement provides ready guidance for a proper positioning of the rung relative to the beam of the cable ladder during the preparation of the assembly.

Figure 4 shows a perspective view of rung 10 passing through a recess in inwardly bent strip 21, formed by bending the free end of the flange of a first U-shaped profile 20, as part of the substantially rectangular S-shape of the profile of the entire beam 5, the first U-shaped profile 20 being provided for receiving the head end of the rung and engaging with the receiving limb of beam 5, which is the first part of the assembly according to the present invention. Of the second U-shaped profile of beam 5, the free flange 23 is bent inwards into the U-shaped profile, in a right angle relative to the free flange.

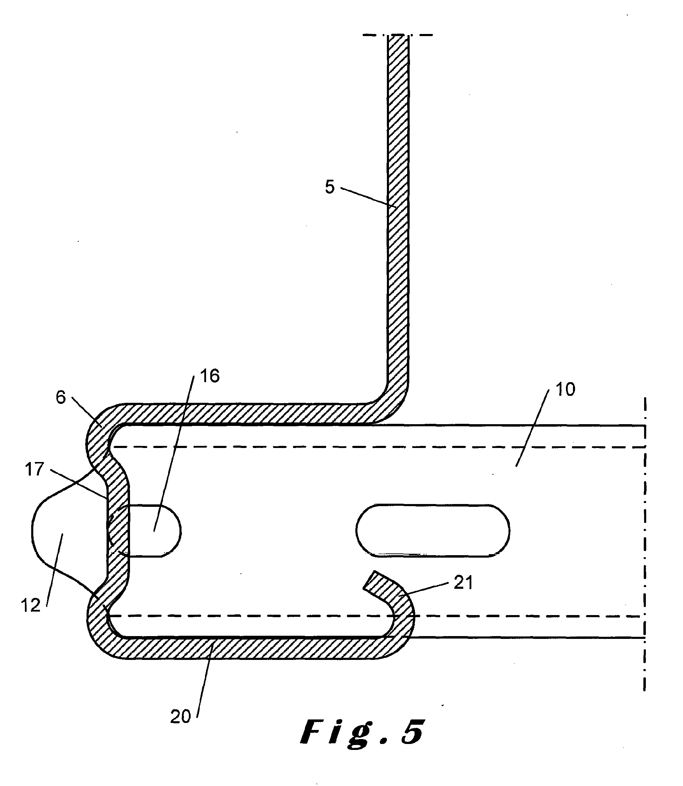

Figure 5 shows a partial cross section of beam 5, essentially the part of the beam comprising the first U-shaped profile 20, which comprises the receiving limb 6, and of which the lower free end 21 is bent inwards to the U-shaped profile. Figure 5 further shows the rung 10 as the second part of the assembly according to the present invention, and lip 12 passing through the receiving limb 6, ready for being bent behind the receiving limb. The two parts are shown before the lips have been bent and the two parts have been connected. Also indicated is perforation 16 appropriately positioned for having lip 12 bend at the exact point where the lip 12 has passed the receiving limb 6. The receiving limb 6 comprises the surface 17 which is suitable for engaging with the lip 12 after this has been bent (the bent lip not being shown). Surface 17 shows a concave curvature suitable for receiving the tip of lip 12 after this has been bent. Thanks to this concave curvature, receiving limb 6 comprises a recess sufficiently large to receive and host the bent part of the lip entirely (not shown).

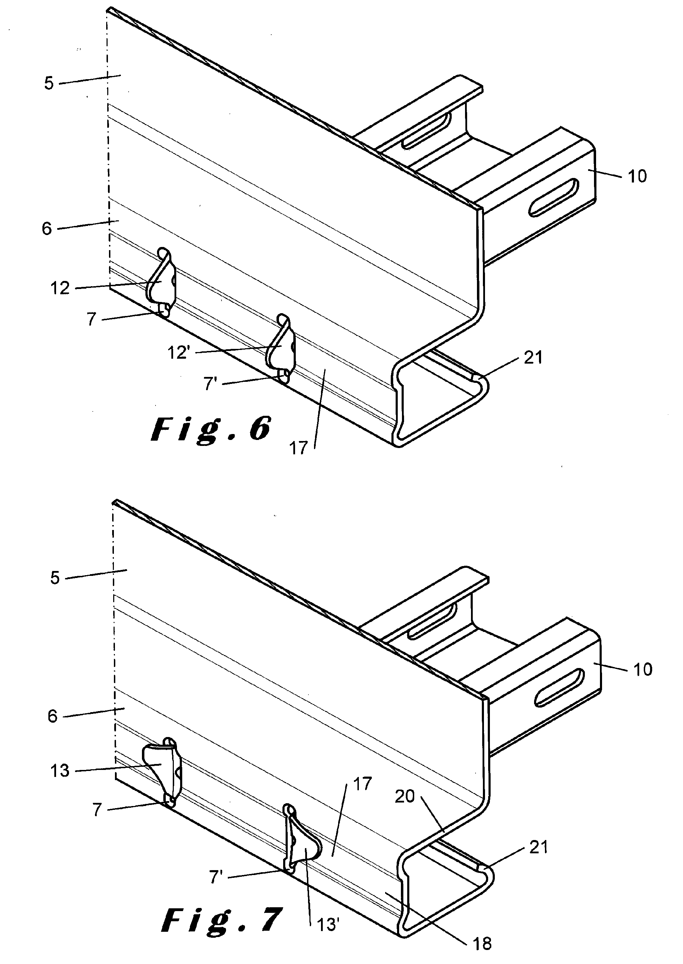

Figure 6 shows a perspective view of the rung 10 and a part of beam 5 in the position shown in Figure 5, i.e. before the lips have been bent and the two parts have been connected. Two lips 12, 12' pass through narrow slits 7, 7' in the receiving limb 6 which is part of a U-shaped profile comprised in beam 5. The receiving limb 6 has a concave curved surface 17. The free end 21 of the flange of the U-shaped profile is bent inwards in an angle of more than 90° relative to the flange.

Figure 7 shows the same perspective view as in Figure 6, with the exception that the lips have been bent and the two parts have been connected, thereby forming the assembly according to the present invention. In Figure 7 are shown the rung 10 and the part of beam 5 comprising the receiving limb 6. Further shown are openings 7, 7' through which the lips protruding from the head end (hidden) of rung 10 are passing, the lips 13, 13' being bent behind the receiving limb 6, engaging with the receiving limb and pressing the receiving limb against the hidden head end of the rung 10. Also shown in Figure 7 is the concave curved surface 17 of the receiving limb 6, which is the result of an inwardly protruding ridge 18 provided as part of the bottom of the U-shaped half 20 of the profile of beam 5, which ridge 18 is suitable for receiving and hosting the bent parts 13, 13' of the lips.

Figure 8a shows a perspective view, and Figure 8b a vertical cross section according to line Vlllb in Figure 8a, of one bent lip according to the present invention. The lip 12 protrudes in a first plane 1 from the head end of the second part (not shown) of the assembly, and passes through opening 7 provided in the receiving limb 6 of the first part of the assembly. The bent tip 13 of the lip is substantially following a second plane 2. The second plane 2 intersects with the first plane according to intersecting line 4, which passes through points Pt1 and Pt2. Plane 2 forms an angle with the first plane 1. In the angle between first plane 1 and second plane 2 is shown a third plane 3, which is the plane bisecting the angle formed between the first plane 1 and the second plane 2 and which bisecting plane cuts the bent lip 12+13. In particular the perspective view of Figure 8a illustrates the curve which would show, relative to the intersection 4 of plane 1 with plane 2, where plane 3 is cutting the bent lip 12+13.Further shown on Figure 8b is imaginary surface 15, which in this particular embodiment is plane 15, running perpendicular to the surface of the receiving limb 6 facing the bent tip 13 of the lip and running along the outer edge of the opening 7 in the receiving limb which is covered by the bent lip 13. Figure 8b shows that also the intersection of the lip 12+13 with this imaginary surface 15 shows a curve relative to the outer edge of the opening 7 in the receiving limb 6 which is covered by the bent lip 13.

## Claims

1. An assembly wherein at least two galvanized steel parts are connected to each other, whereby the first part (5) comprises a receiving limb (6) having at least one opening (7, 7') and the second part (10) comprises at least one head end (11) which engages with the receiving limb (6) and is provided with at least one lip (12, 12') protruding in a first plane (1) from the head end (11), the at least one lip (12, 12') passing through the opening (7, 7') in the receiving limb (6), bending behind the receiving limb (6), whereby the bent end (13, 13') of the lip is substantially following a second plane (2) which intersects (4) and forms an angle with the first plane (1), the lip engaging with the receiving limb (6) and pressing the receiving limb (6) against the head end (11), thereby connecting the two galvanized steel parts, **characterized in that** the intersection of the at least one lip (12) with a third plane (3), which is the plane bisecting the angle formed between the first plane (1) and the second plane (2) and which bisecting plane cuts the lip (12), shows a curve relative to the intersection (4) of the first and the second plane.

2. The assembly according to claim 1 wherein a second intersection of the at least one lip (12) with an imaginary surface (15) running perpendicular to the surface of the receiving limb (6) facing the bent end of the lip and running along the outer edge of the opening (7) in the receiving limb (6) which is covered by the bent end (13) of the lip (12), shows a curve relative to the outer edge of the opening (7) in the receiving limb (6).

3. The assembly according to any one of the preceding claims wherein at least the part of the outer edge of the opening (7, 7') in the receiving limb (6) which is covered by the bent end (13, 13') of the at least one lip (12, 12'), also shows a curve relative to the second plane (2).

4. The assembly according to any one of the preceding claims wherein the bent end (13, 13') of the at least one lip shows a concave curvature relative to the contact surface between the head end (11) and the receiving limb (6).

5. The assembly according to any one of the preceding claims wherein the at least one lip (12, 12') is provided with a perforation (16, 16') which, in the direction into which the lip (12, 12') protrudes from the head end (11) of the second part (10), runs at least up to the bending line of the lip, i.e. the line which connects the points of highest curvature of the bent lip, preferably ending substantially at the bending line of the lip.

6. The assembly according to any one of the preceding claims wherein the zinc layer on the at least one lip, preferably the zinc layer on the second part, has a thickness of at most 70 µm.

7. The assembly according to any one of the preceding claims wherein the second part (10) is provided with at least two lips (12, 12') having the characteristics of the at least one lip, the at least two lips preferably protruding from the second part (10) in substantially the same direction, preferably the at least two lips (12, 12') passing through at least two openings (7, 7') in the receiving limb (6).

8. The assembly according to any one of the preceding claims wherein two lips (12, 12') of the same second part (10) are bent outwardly relative to each other behind the receiving limb (6), preferably substantially pointing away from each other, more preferably pointing in opposite directions, yet more preferably running substantially parallel to the surface of the receiving limb (6).

9. The assembly according to any one of the preceding claims wherein the receiving limb (6) is provided with a recess (18) sufficiently large to receive and host the bent end (13, 13') of the lip entirely.

10. The assembly according to any one of the preceding claims wherein the outer surface of the bent end of the lip runs substantially smoothly with the outer surface of the receiving limb (6), such that a bare hand gliding over the bent end (13, 13') of the lip and the surrounding surface of the receiving limb (6) is not injured, preferably not significantly obstructed in its movement.

11. The assembly according to any one of the preceding claims wherein the receiving limb is provided with a cross-section comprising a U-shaped profile (20) for receiving the head end (11) of the first part (10) and enclosing the head end (11) with the flanges of the U-shaped profile, preferably any free end (21) of the flanges being bent inwards into the U-shaped profile (20) in an angle of more than 90° relative to the flange, whereby preferably the inwardly bent strip is provided with a recess (22) for allowing the head end (11) to pass and optionally to engage with the flange of the U-shaped profile having the free end, more preferably the recess (22) in the inwardly bent strip being tapered in the direction of reception of the head end (11) of the second part (10).

12. A cable ladder comprising the assembly according to any one of the preceding claims wherein at least one of the beams forms the first part (5, 5") and at least one of the rungs forms the second part (10, 10').

13. The cable ladder according to claim 12 whereby the head end of at least one beam (5) of the first cable ladder is provided with a means (25) for partially overlapping with the tail end of a beam of a second cable ladder having substantially the same cross sectional profile as the beam of the first cable ladder, preferably the means for overlapping being a male element, which is flat or having a cross section at least partly similar to the cross sectional profile of the beam of the cable ladder but with smaller dimensions, suitable for overlapping at least partially with the tail end of the beam of the second cable ladder acting as female element, the two beams preferably overlapping over a length of at least 50 mm.

14. A method for connecting two galvanized steel parts with each other to form the assembly according to any one of the preceding claims comprising the steps of (i) passing the at least one protruding lip (12, 12') of the second part (10) through the at least one opening (7, 7') of the receiving limb (6) of the first part (5), (ii) subsequently bending the at least one lip (12, 12') behind the receiving limb (6) and (iii) pressing the bent end (13, 13') of the at least one lip (12, 12') against the receiving limb (6).

15. The method according to claim 14 further comprising the step of hot-dip galvanizing the assembly.

## Patentansprüche

1. Anordnung, bei der mindestens zwei verzinkte Stahlteile miteinander verbunden sind, wobei das erste Teil (5) einen Aufnahmeabschnitt (6) mit mindestens einer Öffnung (7, 7') umfasst und das zweite Teil (10) mindestens ein Kopfende (11) umfasst, das den Aufnahmeabschnitt (6) in Eingriff nimmt und mit mindestens einer Lippe (12, 12') versehen ist, die in einer ersten Ebene (1) von dem Kopfende (11) hervorragt, wobei die mindestens eine Lippe (12, 12') durch die Öffnung (7, 7') in dem Aufnahmeabschnitt (6) durchtritt, wobei sie hinter dem Aufnahmeabschnitt (6) gebogen wird, wobei das gebogene Ende (13, 13') der Lippe im Wesentlichen einer zweiten Ebene (2) folgt, die sich mit der ersten Ebene (1) kreuzt (4) und mit dieser einen Winkel bildet, wobei die Lippe den Aufnahmeabschnitt (6) in Eingriff nimmt und den Aufnahmeabschnitt (6) gegen das Kopfende (11) drückt, wodurch die zwei verzinkten Stahlteile verbunden werden, **dadurch gekennzeichnet, dass** der Kreuzungspunkt der mindestens einen Lippe (12) mit einer dritten Ebene (3), bei der es sich um die Ebene handelt; die den zwischen der ersten Ebene (1) und der zweiten Ebene (2) gebildeten Winkel halbiert, und wobei diese halbierende Ebene die Lippe (12) schneidet, eine Krümmung in Bezug auf den Kreuzungspunkt (4) der ersten und der zweiten Ebene zeigt.

2. Anordnung nach Anspruch 1, bei der ein zweiter Kreuzungspunkt der mindestens einen Lippe (12) mit einer gedachten Fläche (15), die senkrecht zu der Fläche des Aufnahmeabschnitts (6) verläuft, die dem gebogenen Ende der Lippe zugewandt ist und entlang der Außenkante der Öffnung (7) in dem Aufnahmeabschnitt (6) verläuft, die von dem gebogenen Ende (13) der Lippe (12) abgedeckt wird, eine Krümmung in Bezug auf die Außenkante der Öffnung (7) in dem Aufnahmeabschnitt (6) zeigt.

3. Anordnung nach einem der vorhergehenden Ansprüche, bei der mindestens der Teil der Außenkante der Öffnung (7, 7') in dem Aufnahmeabschnitt (6), der von dem gebogenen Ende (13, 13') der mindestens einen Lippe (12, 12') abgedeckt wird, ebenfalls eine Krümmung in Bezug auf die zweite Ebene (2) zeigt.

4. Anordnung nach einem der vorhergehenden Ansprüche, bei der das gebogene Ende (13, 13') der mindestens einen Lippe eine konkave Wölbung in Bezug auf die Kontaktfläche zwischen dem Kopfende (11) und dem Aufnahmeabschnitt (6) zeigt.

5. Anordnung nach einem der vorhergehenden Ansprüche, bei der die mindestens eine Lippe (12, 12') mit einer Perforation (16, 16') versehen ist, die in der Richtung, in der Lippe (12, 12') von dem Kopfende (11) des zweiten Teils (10) hervorragt, mindestens bis zu der Biegelinie der Lippe verläuft, d. h. der Linie, die die Punkte der stärksten Wölbung der gebogenen Lippe verbindet, wobei sie vorzugsweise im Wesentlichen an der Biegelinie der Lippe endet.

6. Anordnung nach einem der vorhergehenden Ansprüche, bei der die Zinkschicht auf der mindestens einen Lippe, vorzugsweise die Zinkschicht auf dem zweiten Teil eine Dicke von höchstens 70 µm hat.

7. Anordnung nach einem der vorhergehenden Ansprüche, bei der das zweite Teil (10) mit mindestens zwei Lippen (12, 12') versehen ist, die die Charakteristika der mindestens einen Lippe haben, wobei die mindestens zwei Lippen vorzugsweise von dem zweiten Teil (10) in im Wesentlichen derselben Richtung hervorragen, wobei vorzugsweise die mindestens zwei Lippen (12, 12') durch mindestens zwei Öffriungen (7, 7') in dem Aufnahmeabschnitt (6) durchtreten.

8. Anordnung nach einem der vorhergehenden Ansprüche, bei der zwei Lippen (12, 12') desselben zweiten Teils (10) hinter dem Aufnahmeabschnitt (6) in Bezug aufeinander nach außen gebogen sind, vorzugsweise im Wesentlichen voneinander weg weisen, mehr bevorzugt in entgegengesetzte Richtungen weisen, noch mehr bevorzugt im Wesentlichen parallel zu der Fläche des Aufnahmeabschnitts (6) verlaufen.

9. Anordnung nach einem der vorhergehenden Ansprüche, bei der der Aufnahmeabschnitt (6) mit einer Vertiefung (18) versehen ist, die ausreichend groß ist, um das gebogene Ende (13, 13') der Lippe vollständig aufzunehmen und zu beherbergen.

10. Anordnung nach einem der vorhergehenden Ansprüche, wobei die Außenfläche des gebogenen Endes der Lippe im Wesentlichen glatt mit der Außenfläche des Aufnahmeabschnitts (6) verläuft, so dass eine bloße Hand, die über das gebogene Ende (13, 13') der Lippe und die es umgebende Fläche des Aufnahmeabschnitts (6) gleitet, nicht verletzt wird, vorzugsweise in ihrer Bewegung nicht wesentlich behindert wird..

11. Anordnung nach einem der vorhergehenden Ansprüche, bei der der Aufnahmeabschnitt mit einem Querschnitt, der ein U-förmiges Profil (20) umfasst, zum Aufnehmen des Kopfendes (11) des ersten Teils (10) und Umschließen des Kopfendes (11) mit den Flanschen des U-förmigeh Profils versehen ist, wobei vorzugsweise jegliches freie Ende (21) der Flansche in einem Winkel von mehr als 90° in Bezug auf den Flansch nach innen in das U-förmige Profil (20) gebogen ist, wobei vorzugsweise der nach innen gebogene Streifen mit einer Vertiefung (22) versehen ist, um zu ermöglichen, dass das Kopfende (11) durchtritt und gegebenenfalls den Flansch des U-förmigen Profils mit dem freien Ende in Eingriff nimmt; wobei mehr bevorzugt die Vertiefung (22) in dem nach innen gebogenen Streifen in der Richtung der Aufnahme des Kopfendes (11) des zweiten Teils (10) verjüngt ist.

12. Kabelleiter, die die Anordnung nach einem der vorhergehenden Ansprüche umfasst und bei der mindestens einer der Holme das erste Teil (5, 5') bildet und mindestens eine der Sprossen das zweite Teil (10, 10') bildet.

13. Kabelleiter nach Anspruch 12, bei der das Kopfende mindestens eines Holms (5) der ersten Kabelleiter mit einem Mittel (25) zum partiellen Überlappen mit dem Fußende eines Holms einer zweiten Kabelleiter mit im Wesentlichen demselben Querschnittsprofil wie der Holm der ersten Kabelleiter versehen ist, wobei vorzugsweise das Mittel zum Überlappen ein Steckerelement ist, das flach ist oder einen Querschnitt hat, der zumindest zum Teil dem Querschnittsprofil des Holms der Kabelleiter ähnlich ist, jedoch mit kleineren Abmessungen, und das zum zumindest partiellen Überlappen mit dem Fußende des Holms der zweiten Kabelleiter geeignet ist, das als Buchsenelement fungiert, wobei die zwei Holme vorzugsweise über eine Länge von mindestens 50 mm überlappen.

14. Verfahren zum Verbinden von zwei verzinkten Stahlteilen miteinander, um die Anordnung nach einem der vorhergehenden Ansprüche zu bilden, wobei das Verfahren die Schritte (i) des Führens der mindestens einen hervorragenden Lippe (12, 12') des zweiten Teils (10) durch die mindestens eine Öffnung (7, 7') des Aufnahmeabschnitts (6) des ersten Teils (5), (ii) des anschließenden Biegens der mindestens einen Lippe (12, 12') hinter dem Aufnahmeabschnitt (6) und (iii) des Drückens des gebogenen Endes (13, 13') der mindestens einen Lippe (12, 12') gegen den Aufnahmeabschnitt (6) umfasst.

15. Verfahren nach Anspruch 14, das weiterhin den Schritt des Feuerverzinkens der Anordnung umfasst.

## Revendications

1. Ensemble dans lequel au moins deux pièces d'acier galvanisé sont reliées l'une à l'autre, la première pièce (5) comprenant un membre récepteur (6) ayant au moins une ouverture (7, 7') et la deuxième pièce (10) comprenant au moins une extrémité de tête (11) qui entre en prise avec le membre récepteur (6) et est pourvue d'au moins une lèvre (12, 12') faisant saillie de l'extrémité de tête (11) dans un premier plan (1), ladite au moins une lèvre (12, 12') traversant l'ouverture (7, 7') dans le membre récepteur (6), se pliant derrière le membre récepteur (6), l'extrémité pliée (13, 13') de la lèvre suivant sensiblement un deuxième plan (2) qui coupe (4) et forme un angle avec le premier plan (1), la lèvre entrant en prise avec le membre récepteur (6) et pressant le membre récepteur (6) contre l'extrémité de tête (11), reliant ainsi les deux pièces d'acier galvanisé, **caractérisé en ce que** l'intersection de ladite au moins une lèvre (12) avec un troisième plan (3), qui est le plan bissecteur de l'angle formé entre le premier plan (1) et le deuxième plan (2) et lequel plan bissecteur coupe la lèvre (12), montre une courbe par rapport à l'intersection (4) du premier et du deuxième plan.

2. Ensemble selon la revendication 1, dans lequel une deuxième intersection de ladite au moins une lèvre (12) avec une surface imaginaire (15) s'étendant pérpendicûlairement à la surface du membre récepteur (6) faisant face à l'extrémité pliée de la lèvre et s'étendant le long du bord extérieur de l'ouverture (7) dans le membre récepteur (6) qui est couvert par l'extrémité pliée (13) de la lèvre (12), montre une courbe par rapport au bord extérieur de l'ouverture (7) dans le membre récepteur (6).

3. Ensemble selon l'une, quelconque des revendications précédentes, dans lequel au moins la partie du bord extérieur de l'ouverture (7, 7') dans le membre récepteur (6) qui est couvert par l'extrémité pliée (13, 13') de ladite au moins une lèvre (12, 12') présente aussi une courbe par rapport au deuxième plan (2).

4. Ensemble selon l'une quelconque des revendications précédentes, dans lequel l'extrémité pliée (13, 13') de ladite au moins une lèvre présente une courbure concave par rapport à la surface de contact entre l'extrémité de tête (11) et le membre récepteur (6).

5. Ensemble selon l'une quelconque des revendications précédentes, dans lequel ladite au moins une lèvre (12, 12') est pourvue d'une perforation (16, 16') qui, dans la direction dans laquelle la lèvre (12, 12') fait saillie de l'extrémité de tête (11) de la deuxième pièce (10), s'étend au moins jusqu'à la ligne de pliure de la lèvre, c'est-à-dire la ligne qui relie les points de la courbure la plus élevée de la lèvre pliée, se terminant de préférence sensiblement à la ligne de pliure de la lèvre.

6. Ensemble selon l'une quelconque des revendications précédentes, dans lequel la couche de zinc sur ladite au moins une lèvre, de préférence la couche de zinc sur la deuxième pièce, a une épaisseur d'au plus 70 µm.

7. Ensemble selon l'une quelconque des revendications précédentes, dans lequel la deuxième pièce (10) est pourvue d'au moins deux lèvres (12, 12') ayant les caractéristiques de ladite au moins une lèvre, lesdites au moins deux lèvres faisant de préférence saillie de la deuxième pièce (10) dans sensiblement la même direction, ;de préférence lesdites au moins deux lèvres (12, 12') traversant au moins deux ouvertures (7, 7') dans le membre récepteur (6).

8. Ensemble selon l'une quelconque des revendications précédentes, dans lequel lesdites au moins deux lèvres (12, 12') de la même deuxième pièce (10) sont pliées vers l'extérieur l'une par rapport à l'autre derrière le membre récepteur (6), s'écartant de préférence sensiblement l'une de l'autre, mieux encore pointant dans des sens opposés, même mieux encore s'étendant sensiblement parallèlement à la surface du membre récepteur (6).

9. Ensemble selon l'une quelconque des revendications précédentes, dans lequel le membre récepteur (6) est pourvu d'un évidement (18) suffisamment grand pour recevoir et héberger entièrement l'extrémité pliée (13, 13') de la lèvre.

10. Ensemble selon !'une quelconque dès revendications précédentes, dans lequel la surface extérieure de l'extrémité pliée de la lèvre s'unit pratiquement sans à-coups à la surface extérieure du membre récepteur (6) de sorte qu'une main nue glissant sur l'extrémité pliée (13, 13') de la lèvre et la surface environnante du membre récepteur (6) n'est pas blessée, de préférence n'est pas gênée de manière significative dans son mouvement.

11. Ensemble selon l'une quelconque des revendications précédentes, dans lequel le membre récepteur est pourvu d'une section transversale comprenant un profilé en forme de U (20) pour recevoir l'extrémité de tête (11) de la première pièce (10) et enfermant l'extrémité de tête (11) avec les ailes du profilé en forme de U, de préférence une quelconque extrémité libre (21) des ailes étant pliée vers l'intérieur dans le profilé en forme de U (20) à un angle de plus de 90° par rapport à l'aile, la bande pliée vers l'intérieur étant de préférence pourvue d'un évidement (22) pour permettre à l'extrémité de tête (11) de passer et éventuellement d'entrer en prise avec l'aile du profilé en forme de U ayant l'extrémité libre, mieux encore l'évidement (22) dans la bande pliée vers l'intérieur étant effilé dans le sens de réception de l'extrémité de tête (11) de la deuxième pièce (10).

12. Échelle de câble comprenant l'ensemble selon l'une quelconque des revendications précédentes, dans laquelle au moins un des montants forme la première pièce (5, 5") et au moins un des échelons forme la deuxième pièce (10, 10')

13. Échelle de câble selon la revendication 12, dans laquelle l'extrémité de tête d'au moins un montant (5) de la première échelle de câble est pourvue d'un moyen (25) pour chevaucher au moins en partie l'extrémité de queue d'un montant d'une deuxième échelle de câble, le moyen de chevauchement étant de préférence un élément mâle, qui est plat ou a une section transversale au moins en partie similaire au profil de section transversale du montant de l'échelle de câble mais aux dimensions plus petites, approprié pour chevaucher au moins en partie l'extrémité de queue du montant de la deuxième échelle de câble agissant comme élément femelle, les deux montants se chevauchant de préférence sur une longueur d'au moins 50 mm.

14. Procédé pour relier l'une à l'autre deux pièces d'acier galvanisé pour former l'ensemble selon l'une quelconque de revendications précédentes, comprenant les étapes consistant à (i) faire passer ladite au moins une lèvre (12, 12') en saillie de la deuxième pièce (10) à travers ladite au moins une ouverture (7, 7') du membre récepteur (6) de la première pièce (5), (ii) plier ensuite ladite au moins une lèvre (12, 12') derrière le membre récepteur (6) et (iii) presser l'extrémité pliée (13, 13') de ladite au moins une lèvre (12, 12') contre le membre récepteur (6).

15. Procédé selon la revendication 14 comprenant en outre l'étape de galvanisation à chaud au trempé de l'ensemble.
